# FASCICULE DE BREVET EUROPEEN

(11) **EP 2 556 116 B1**
(45) Date de publication et mention de la délivrance du brevet: **17.08.2016**
(21) Numéro de dépôt: 11718422.6
(22) Date de dépôt: 15.03.2011
(51) Int. Cl.: C08L 83/04, C09J 183/04, C08K 5/5419, C08K 3/04, F16J 15/00

(54) **PROCEDE ET COMPOSITIONS UTILES POUR L'ETANCHEIFICATI0N ET L'ASSEMBLAGE DE COMPOSANTS D'UN GROUPE MOTO-PROPULSEUR**
VERFAHREN UND ZUSAMMENSETZUNGEN ZUR ABDICHTUNG UND MONTAGE VON ANTRIEBSSTRANGTEILEN
METHOD AND COMPOSITIONS FOR THE SEALING AND ASSEMBLY OF POWER TRAIN COMPONENTS

(30) Priorité: 16.03.2010 FR 1001053
(43) Date de publication de la demande: 13.02.2013
(73) Titulaire: Bluestar Silicones France, 69007 Lyon (FR)
(72) Inventeur: IRELAND, Tania, F-69007 Lyon (FR); MONTI, Pascale, 69540 Irigny (FR)
(74) Mandataire: Mekki, Boualem
(86) Numéro de dépôt international: PCT/FR2011/000142
(87) Numéro de publication internationale: WO 2011/114021

(56) Documents cités:
- EP-A1- 1 985 666
- US-A- 5 247 011
- US-A- 5 641 832
- DATABASE WPI Week 200961 Thomson Scientific, London, GB; AN 2009-N15005 XP002585011, -& JP 2009 197188 A (TOKYO THREE BOND CO LTD) 3 septembre 2009 (2009-09-03) cité dans la demande
- PARBHOO B ET AL: "Fundamental aspects of adhesion technology in silicones", 1 janvier 2002 (2002-01-01), ADHESION SCIENCE AND ENGINEERING, ELSEVIER B.V, NETHERLANDS, PAGE(S) 677 - 709, XP008136182, ISBN: 978-0-444-51140-9 [extrait le 2007-08-01] page 682 - page 684

## Description

La présente invention a pour objet une composition silicone réticulable en élastomère et un procédé utilisant la composition selon l'invention pour former des joints d'étanchéité et d'assemblage des composants d'un groupe moto-propulseur. Les élastomères silicones préparés à partir de la composition selon l'invention présentent:
- une bonne résistance au vieillissement dans des fluides agressifs chimiquement tels que ceux utilisés par exemple dans un groupe motopropulseur en l'occurrence les huiles moteur, les lubrifiants pour boîte de vitesse et pont, les mélanges huile/essence, les liquides de refroidissement, les fuels ou les liquides antigel,
- de bonnes propriétés d'adhésion même sur des surfaces polluées par des huiles utilisées dans un groupe motopropulseur, et
- de bonnes propriétés de résistance mécanique telles que la résistance à la rupture, le module à 100 % d'allongement et la dureté shore.

Par "liquide de refroidissement", on entend tout liquide caloporteur utilisé pour évacuer les calories d'un système mécanique ou électronique.

Les compositions silicones réticulables en élastomère pour former des joints d'étanchéité sont connues. En effet, elles conviennent en particulier pour la formation de joints d'étanchéité "in-situ", qui sont formés directement lors de l'assemblage des éléments, en particulier dans le domaine de l'automobile.

Parmi les compositions silicones réticulables en élastomère connues pour ce type d'application, celles qui réticulent dès la température ambiante forment une catégorie qui attire toute l'attention car elles ne nécessitent pas la mise en place de four consommateur d'énergie.

Ces compositions silicones sont classées en 2 groupes distincts: les compositions monocomposantes (RTV-1) et les compositions bi-composantes (RTV-2). Le terme "RTV" est l'acronyme pour "Room Temperature Vulcanising".

Lors de la réticulation, l'eau (soit apportée par une humidité atmosphérique dans le cas des RTV-1, soit introduite dans une partie de la composition dans le cas des RTV-2) permet la réaction de polycondensation, qui conduit à la formation du réseau élastomère.

Généralement, les compositions monocomposantes (RTV-1) réticulent quand elles sont exposées à l'humidité de l'air. Le plus souvent, la cinétique des réactions de polycondensation est extrêmement lente; ces réactions sont donc catalysées par un catalyseur approprié.

De plus, face à une industrie du transport en pleine évolution, on voit apparaître de nouvelles contraintes liées à l'augmentation des rendements moteurs, à l'augmentation des températures de fonctionnement, à la diminution de la consommation en carburant et à la diminution de la fréquence d'entretien.

Ainsi, les formulateurs de fluides motopropulseurs (huile moteur, lubrifiant pour boite de vitesse et pont, mélange huile/essence, liquide de refroidissement, fuel ou liquide antigel) continuent d'améliorer les performances de ces produits par l'addition d'additifs de plus en plus efficace. La quantité d'additifs incorporée dans ces produits augmente de plus en plus, ce qui a pour effet d'augmenter leur agressivité chimique vis à vis des organes souples, par exemple les joints d'étanchéité, présents dans les dispositifs dans lesquels ces produits sont utilisés.

Le brevet US 5641832 décrit des compositions polyorganosiloxanes réticulables en élastomère comprenant comme absorbeur d'huile une charge poreuse imprégnée par un composé organique volatil.

La demande de brevet JP-A-2009197188 décrit des compositions silicones ayant une bonne résistance au contact des différents fluides utilisés dans un groupe motopropulseur mais ces compositions comprennent des huiles réticulables complexes et coûteuses qui contiennent une rotule alkylène en C1 à C5 et représenté par le symbole Y dans les formules suivantes :

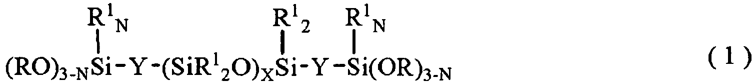

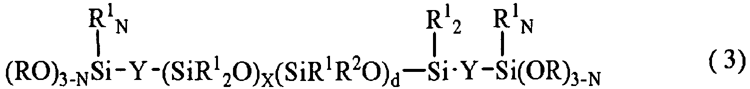

Il existe donc un besoin croissant pour trouver de nouvelles compositions silicones utiles pour former des joints d'étanchéité et d'assemblage des composants d'un groupe moto-propulseur, même sur des surfaces polluées par des huiles.

Ainsi, un des objectifs essentiels de la présente invention est de proposer de nouvelles compositions d'organopolysiloxanes durcissant en un élastomère silicone en présence d'eau ou d'humidité utiles pour l'étanchéification et l'assemblage des éléments d'un groupe moto-propulseur.

Un autre objectif est de proposer un nouveau procédé d'étanchéification et d'assemblage de composants d'un groupe moto-propulseur au moyen de joints silicones ayant une bonne résistance au contact des différents fluides utilisés dans un groupe motopropulseur tout en ayant de bonnes propriétés d'adhésion.

Ces objectifs, parmi d'autres, sont atteints par la présente invention qui concerne une Composition polyorganosiloxane X réticulable en élastomère en présence d'eau par des réactions de polycondensation comprenant :
A) au moins un polyorganosiloxane **A** comprenant au moins un groupement alcoxylé et constitué de motifs siloxyles identiques ou différents, de formule :

   (Z)_{b}(R⁴)ₐSiO_{[4-(a'+b)]/2} **(1)**

   dans laquelle :
   - le symbole Z = [-(OCH₂CH₂)_{c}-OR⁵], avec c=0 ou 1,
   - a= 0, 1, 2 ou 3; b= 0, 1, 2 ou 3, a+b= 0, 1, 2 ou 3,
   - le symbole R⁴ représente un radical monovalent hydrocarboné en C₁ à C₁₃,
   - le symbole R⁵ représente un radical monovalent hydrocarboné en C₁ à C₆ ou un radical alkoxyalkyle comprenant éventuellement une fonction ester, et
   - avec la condition que pour au moins un motif siloxyle l'indice b≥1 de manière à ce que le polyorganosiloxane **A** contienne au moins un groupement alcoxylé Z,
B) au moins un siloxane **D** qui est un condensat obtenu par hydrolyse partielle et condensation d'un silane polyalcoxylé, le dit siloxane **D** ayant de 2 à 10 motifs siloxyles, identiques ou différents, de formule :

   (R²)_{x'}(OR³)_{y'} SiO_{[4-(x'+y')]/2} **(2)**

   dans laquelle :
   - x'= 0, 1, 2 ou 3; y'= 0, 1, 2 ou 3, x'+y'= 0, 1, 2 ou 3,
   - le symbole R² représente un radical monovalent hydrocarboné en C₁ à C₁₃, et
   - le symbole R³ représente un radical monovalent hydrocarboné en C₁ à C₆ ou un radical alkoxyalkyle comprenant éventuellement une fonction ester, et
   - avec la condition que pour au moins un motif siloxyle l'indice y'≥1.
C) un additif **E** susceptible d'absorber une huile utilisée dans un groupe moto-propulseur qui est le noir d'acétylène,
D) une quantité catalytiquement efficace d'au moins un catalyseur de condensation **F,**
E) au moins une charge **G** qui est un carbonate de calcium d'un diamètre particulaire moyen supérieur à 0,1 µm éventuellement traité en surface par un acide organique ou un ester d'acide organique
F) éventuellement au moins un promoteur d'adhérence **H**, et
G) éventuellement au moins un additif **I** tel qu'une base colorante, un pigment ou un agent thixotropant.

Pour atteindre cet objectif, la Demanderesse a eu le mérite de mettre en évidence, de manière tout à fait surprenante et inattendue, que l'utilisation d'un siloxane **D** qui est un condensat obtenu par hydrolyse partielle et condensation d'un silane polyalcoxylé en association avec un additif **E** susceptible d'absorber une huile utilisée dans un groupe moto-propulseur qui est le noir d'acétylène, permet de préparer des joints assurant l'étanchéification et l'assemblage, de composants ou d'éléments utilisés dans un groupe moto-propulseur et ceci même avec des polyorganosiloxanes alcoxylés ne présentant pas de rotule alkyle tels que décrits dans la demande de brevet JP-A-2009197188.

De plus, les élastomères silicones préparés à partir de la composition selon l'invention présentent l'avantage de maintenir de bonnes propriétés mécaniques même lorsqu'ils sont en contact prolongé avec des fluides agressifs sur le plan chimique tels que ceux utilisés par exemple dans un groupe motopropulseur.

Comme exemple de fluides agressifs sur le plan chimique on peut citer par exemple:
les huiles pour moteur, les lubrifiants pour boite de vitesse et pont, les mélanges huiles/essence, les liquides de refroidissement, les fuels et les liquides antigel.

De préférence, le polyorganosiloxane réticulable **A** est linéaire et a pour formule développée: 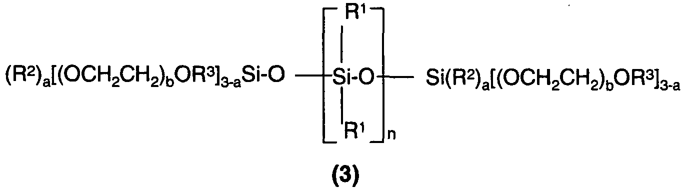 dans laquelle :
- les substituants R1, identiques ou différents, représentent chacun un radical monovalent hydrocarboné saturé ou non en C₁ à C₁₃, substitué ou non substitué, aliphatique, cyclanique ou aromatique ;
- les substituants R2, identiques ou différents, représentent chacun un radical monovalent hydrocarboné saturé ou non en C₁ à C₁₃, substitué ou non substitué, aliphatique, cyclanique ou aromatique ;
- les substituants R3, identiques ou différents, représentent chacun un radical alkyle, linéaire ou ramifié, en C₁ à C₆ ;
- n a une valeur suffisante pour conférer au polyorganopolysiloxane de formule A une viscosité dynamique à 25°C allant de 1.000 à 1.000.000 mPa.s ; et
- l'indice a est égal à zéro ou 1 et l'indice b est égal à zéro ou 1 ;

Selon un autre mode de réalisation préféré, le le polyorganosiloxane **A** comprenant au moins un groupement alcoxylé est obtenu en faisant réagir, éventuellement in-situ, en présence d'une quantité catalytiquement efficace d'au moins un catalyseur C de fonctionnalisation:
a) au moins un polyorganosiloxane **A'** comprenant des motifs siloxyles de formule :

   (R¹)ₓ(OH)_{y}SiO_{(4-x-y)//2} **(4)**

   dans laquelle :
   - x+y= 0, 1, 2 ou 3 ;
   - les substituants R¹, identiques ou différents, représentent chacun un radical monovalent hydrocarboné en C₁ à C₃₀ et choisi parmi le groupe constitué par les radicaux alkyles, cycloalkyles, aryles ; alkaryles et aralkyles, et
   - au moins deux motifs siloxyles comprenant un groupement =SiOH sont présents dans le polyorganosiloxane **A',** avec
b) au moins un silane polyalcoxylé **B** de formule :

   (R²)_{z}Si(OR³)_{(4-z)} **(5)**

   dans laquelle :
   - z = 0 ou 1,
   - le symbole R² représente un radical monovalent hydrocarboné en C₁ à C₁₃, et
   - les symboles R³, identiques ou différents, représentent chacun un radical monovalent hydrocarboné en C₁ à C₆ ou un radical alkoxyalkyle présentant éventuellement une fonction ester,

La préparation de polyorganosiloxane comprenant des groupements alcoxylés par fonctionnalisation est décrite par exemple dans la demande de brevet français n° FR2638752-A1.

Selon un autre mode de réalisation préféré, le polyorganosiloxane **A'** est de préférence un polymère α,ω-dihydroxypolydiorganosiloxane, de viscosité comprise entre 50 et 5 000 000 mPa.s à 25°C.

Les silanes polyalcoxylés **B** sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Comme exemples de silanes polyalcoxylés B , on peut citer ceux de formule:

Si(OCH₃)₄

Si(OCH₂CH₃)₄

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂)

(CH₃O)₃Si(CH₂-CH=CH₂)

(CH₃O)₃Si[CH₂-(CH₃)C=CH₂]

(C₂H₅O)₃Si(OCH₃)

Si(OCH₂-CH₂-OCH₃)₄

CH₃Si(OCH₂-CH₂-OCH₃)₃

(CH₂=CH)Si(OCH₂CH₂OCH₃)₃

C₆H₅Si(OCH₃)₃

C₆H₅Si(OCH₂-CH₂-OCH₃)₃.

L'introduction d'une charge **G** a pour but de conférer de bonnes caractéristiques mécaniques et rhéologiques aux élastomères découlant du durcissement des compositions conformes à l'invention.

On utilise, par exemple, des charges minérales très finement divisés dont le diamètre particulaire moyen est inférieur à 0,1 µm. Parmi ces charges figurent les silices de combustion et les silices de précipitation; leur surface spécifique BET est généralement supérieure à 40 m²/g. Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium éventuellement traité en surface par un acide organique ou par un ester d'un acide organique, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être constituées d'un mélange de plusieurs types de charges de granulométrie différente; ainsi par exemple, elles peuvent être constituées de 30 à 70 % de silices finement divisées de surface spécifique BET supérieure à 40 m² /g et de 70 à 30 % de silices plus grossièrement divisées de surface spécifique inférieure à 30 m²/g. Ces charges peuvent avoir été traitées en surface

La charge **G** est présente et est au moins un carbonate de calcium présentant un diamètre particulaire moyen supérieur à 0,1 µm traité en surface par un acide stéarique.

La composition selon l'invention peut comprendre au moins un promoteur d'adhérence **H** tel que par exemple :
vinyltriméthoxysilane (VTMO),
3-glycidoxypropyl-triméthoxysilane (GLYMO),
méthacryloxypropyltriméthoxysilane (MEMO),
[H₂N(CH₂)₃]Si(OCH₂CH₂CH₃)₃,
[H₂N(CH₂)₃]Si(OCH₃)₃
[H₂N(CH₂)₃]Si(OC₂H₅)₃
[H₂N(CH₂)₄]Si(OCH₃)₃
[H₂NCH₂CH(CH₃)CH₂CH₂]SiCH₃(OCH₃)₂
[H₂NCH₂]Si(OCH₃)₃
[n-C₄H₉-HN-CH₂]Si(OCH₃)₃
[H₂N(CH₂)₂NH(CH₂)₃]Si(OCH₃)₃
[H₂N(CH₂)₂NH(CH₂)₃]Si(OCH2CH₂OCH₃)₃
[CH₃NH(CH₂)₂NH(CH₂)₃]Si(OCH₃)₃
[H(NHCH₂CH₂)₂NH(CH₂)₃]Si(OCH₃)₃
HS(CH₂)₃Si(OCH₃)₃
NH2CONH2(CH₂)₃Si(OCH₃)₃ 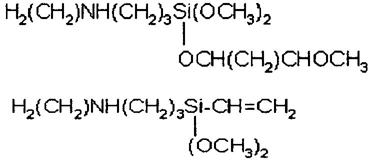 ou des oligomères polyorganosiloxaniques contenant de tels groupes organiques à une teneur supérieure à 20%.

De préférence le catalyseur C de fonctionnalisation est la lithine (ou hydroxyde de lithium) ou la potasse.

La lithine se trouve largement dans le commerce. De préférence elle est utilisée en solution dans un alcool, tel que par exemple du méthanol ou de l'éthanol.

Selon un mode de réalisation préféré, le catalyseur de condensation **F** est un dérivé de l'étain, du zinc ou du titane ou une guanidine éventuellement silylée.

Comme catalyseur de condensation dérivé de l'étain, on peut utiliser les monocarboxylates et les dicarboxylates d'étain tels que l'éthyl-2 hexanoate d'étain, le dilaurate de dibutylétain, le diacétate de dibutylétain (voir le livre de NOLL "Chemistry and technology of silicone", page 337, Academic Press, 1968-2ème édition ou les brevets EP-147 323 ou EP235049).

Selon un mode de réalisation préféré, le catalyseur de condensation **F** est une guanidine répondant à la formule générale **(I)**: 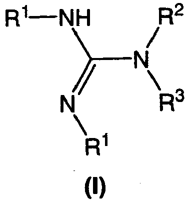 dans laquelle,
- les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
- le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine, et
- le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine,
- lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants.

Il s'agit de guanidines 1,2,3-trisubstituées et 1,2,3,3-tétrasubstituées et présentent l'avantage d'être liquides, incolores, inodores et solubles dans les matrices silicones. Des exemples de ce type de catalyseurs sont décrits dans la demande de brevet internationale WO2009/118307.

De préférence on utilisera les catalyseurs **(A1)** à **(A6)** suivants:

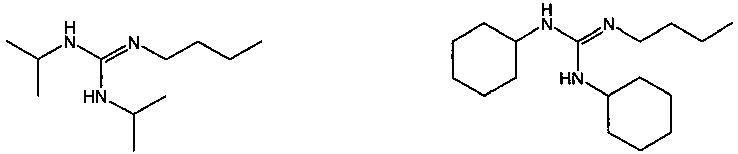

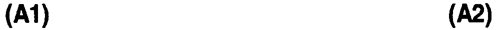

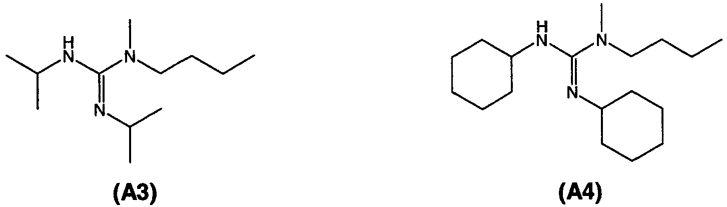

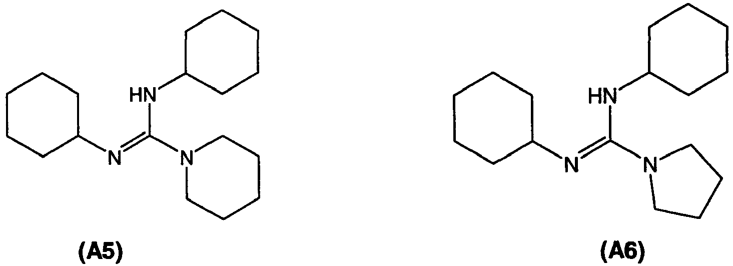

Selon un autre mode de réalisation préféré, le catalyseur de condensation F est une guanidine de formule : 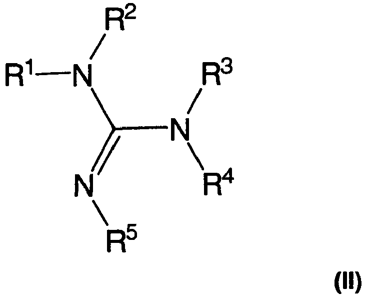 dans laquelle,
- les radicaux R¹, R², R³, R⁴ ou R⁵ identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle, un groupement aromatique un groupe arylalkyle, un groupement fluoroalkyle, un groupement alkylamine ou alkylguanidine, et
- les radicaux R¹, R², R³ ou R⁴ peuvent être liés deux à deux de manière à former un cycle aliphatique à 3, 4, 5, 6 ou 7 chaînons éventuellement substitué par un ou plusieurs substituants.

Il s'agit de guanidines pentasubstituées et présentent l'avantage d'être liquides, incolores, inodores et solubles dans les matrices silicones.

Selon un mode de réalisation particulier, les composés **(A7)** à **(A9)** suivants sont préférés:

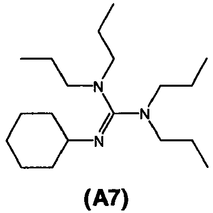

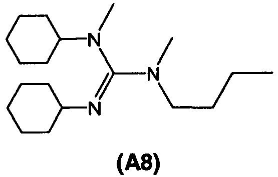

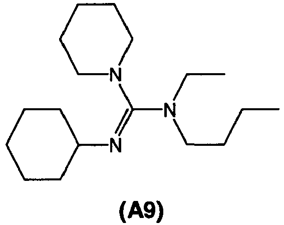

Ils sont par exemple décrits dans la demande de brevet français n° FR-0806610 déposé le 25 novembre 2008.

Selon un autre mode de réalisation, le catalyseur de condensation **F** est un complexe ou sel métallique du zinc de formule:

[Zn(L¹)ᵣ₁(L²)ᵣ₂] **(III)**

dans laquelle:
- r1 ≥ 1 et r2 ≥ 0 et r1+r2=2,
- le symbole L¹ représente un ligand qui est un anion β-dicarbonylato ou l'anion énolate d'un composé β-dicarbonylé ou un anion acétylacétato dérivé d'un β-cétoester, et
- le symbole L² représente un ligand anionique différent de L¹.

Des exemples de ce type de catalyseurs sont décrits dans la demande internationale WO-2009/106723.

De préférence on choisira le catalyseur de condensation F parmi les composés suivants :
**(A10):** Zn(DPM)₂ ou [Zn (*t-Bu-acac*)₂] avec DPM=(*t-Bu-acac*) = l'anion 2,2,6,6-tétraméthyl-3,5-heptanedionato ou l'anion énolate de la 2,2,6,6-tétraméthyl-3,5-heptanedione,
**(A11):** [Zn (*EAA*)₂] avec *EAA* = l'anion éthyle acétoacétato ou l'anion énolate de l'éthyle acétoacétate,
**(A12):** [Zn(*iPr-AA*)₂] avec *iPr-AA* = l'anion isopropyle acétoacétato ou l'anion énolate de l'isopropyle acétoacétate, et

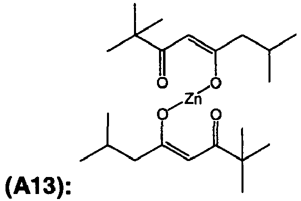

Ce catalyseur présente l'avantage d'être liquide à température ambiante (25°C) et soluble dans des solvants organiques, même dans des alcanes, et dans les huiles silicones.

Selon un mode de réalisation préféré, la composition polyorganosiloxane **X** selon l'invention comprend :
A) pour 100 parties en poids d'au moins un polyorganosiloxane A comprenant au moins un groupement alcoxylé et constitué de motifs siloxyles identiques ou différents, de formule :

   (Z)_{b}(R⁴)ₐSiO_{[4-(a'+b)]/2} (1)

   dans laquelle:
   - le symbole Z = [-(OCH₂CH₂)_{c}-OR⁵], avec c=0 ou 1,
   - a= 0, 1, 2 ou 3; b= 0, 1, 2 ou 3, a+b= 0, 1, 2 ou 3,
   - le symbole R⁴ représente un radical monovalent hydrocarboné en C₁ à C₁₃,
   - le symbole R⁵ représente un radical monovalent hydrocarboné en C₁ à C₆ ou un radical alkoxyalkyle comprenant éventuellement une fonction ester, et
   - avec la condition que pour au moins un motif siloxyle l'indice b≥1 de manière à ce que le polyorganosiloxane **A** contienne au moins un groupement alcoxylé Z,
B) de 1 à 50 parties en poids d'au moins un siloxane D qui est un condensat obtenu par hydrolyse partielle et condensation d'un silane polyalcoxylé, le dit siloxane D ayant de 2 à 10 motifs siloxyles, identiques ou différents, de formule :

   (R²)_{x'}(OR³)_{y'}SiO_{[4-(x'+y')]/2} (2)

   dans laquelle:
   - x'= 0, 1, 2 ou 3; y'= 0, 1, 2 ou 3, x'+y'= 0, 1, 2 ou 3,
   - le symbole R² représente un radical monovalent hydrocarboné en C₁ à C₁₃,
   - le symbole R³ représente un radical monovalent hydrocarboné en C₁ à C₆ ou un radical alkoxyalkyle compenant éventuellement une fonction ester, et
   - avec la condition que pour au moins un motif siloxyle l'indice y'≥1.
C) de 0,1 à 50 parties en poids d'un additif **E** susceptible d'absorber une huile utilisée dans un groupe moto-propulseur qui est le noir d'acétylène,
D) de 0,01 à 50 parties en poids une quantité catalytiquement efficace d'au moins un catalyseur de condensation **F,**
E) jusqu'à 250 parties en poids d'au moins une charge **G** qui est un carbonate de calcium d'un diamètre particulaire moyen supérieur à 0,1 µm éventuellement traité en surface par un acide organique ou un ester d'acide organique,
F) de 0 à 60 parties en poids d'au moins un promoteur d'adhérence **H,** et
G) de 0 à 20 parties en poids d'au moins un additif **I** tel qu'une base colorante, un pigment ou un agent thixotropant.

Comme exemple d'agent thixotropant on peut citer :
- les épaississants inorganiques, l'acide borique et les borates, les titanates, les aluminates, les zirconates ;
- les composés portant des groupements hydroxyles ;
- les composés à base de polyéthylène et/ou polypropylène ;
- les composés comprenant des fonctions amines cycliques ;
- les composés de type polyéther ou comprenant des groupements polyéther, et
- les résines fluorées, de préférence à base de polyfluoroéthylène (PFE) et plus préférentiellement encore à base de polytétrafluoroéthylène (PTFE ou téflon®).

Un autre objet de l'invention concerne un élastomère obtenu par réticulation en présence d'eau de la composition polyorganosiloxane **X** selon l'invention et telle que définie ci-dessus.

Un autre objet de l'invention concerne l'utilisation de la composition polyorganosiloxane **X** selon l'invention et telle que définie ci-dessus ou de l'élastomère selon l'invention et tel que défini ci-dessus pour préparer des joints silicones d'étanchéité ayant une bonne résistance au vieillissement dans des fluides utilisés dans un groupe motopropulseur.

Enfin le dernier objet selon l'invention concerne un procédé d'étanchéification et d'assemblage d'au moins un composant d'un groupe moto-propulseur comprenant les étapes a) à d) suivantes:
a) on prépare une composition polyorganosiloxane **X** selon l'invention et telle que définie ci-dessus,
b) on applique ladite composition polyorganosiloxane **X** sur au moins une zone de contact dudit composant de manière continue ou discontinue et éventuellement sous la forme d'un cordon,
c) on laisse réticuler ladite composition polyorganosiloxane **X** en élastomère silicone en présence d'humidité apportée par l'air ambiant ou par addition préalable d'eau de manière à former un joint d'étanchéité, et
d) on assemble ledit composant à un autre composant du groupe moto-propulseur de manière à ce que le joint formé assure l'assemblage et l'étanchéité entre les deux composants du groupe moto-propulseur.

Dans le domaine de l'automobile, les élastomères silicones sont souvent utilisés sous la forme de joints silicones. Le terme "joints silicones" englobent plusieurs types de joints d'étanchéités, à savoir les joints "flués" (JF) également appelés joints écrasés et les joints profilés sur pièce (JPP) également appelés "joints en forme".

Les joints "flués" (JF) sont généralement formés à la suite de l'application d'un cordon pâteux des compositions sur la zone de contact entre 2 éléments métalliques ou plastiques à assembler. Le cordon pâteux est d'abord déposé sur l'un des éléments puis l'autre élément est appliqué sur le premier; il en résulte un écrasement du cordon avant qu'il ne se transforme en élastomère. Ce type de joints s'adresse à des assemblages ne devant pas être couramment démontés (joints de carter d'huile, joints de carter de distribution...).

Les joints "profilés sur pièce" (JPP) sont utilisés en particulier dans le secteur du transport et de l'automobile, pour des applications d'étanchéité sur toutes les pièces moteur exigeant une démontabilité telles à titre d'exemples, le couvre culasse, pompe à huile, pompe à eau, boîte à eau, carter d'huile, carter de distribution, guide d'embrayage. Les "joints profilés sur pièce" (JPP) sont généralement formés à la suite de l'application d'un cordon pâteux des compositions sur la zone de contact entre 2 éléments à assembler. Toutefois, après la dépose du cordon pâteux sur l'un des éléments on laisse réticuler le cordon en élastomère puis on applique le deuxième élément sur le premier. Il en résulte qu'un tel assemblage est aisément démontable puisque l'élément qui est appliqué sur celui ayant reçu le joint, n'adhère pas à ce joint. Par ailleurs le joint, par son caractère élastomérique, épouse les irrégularités des surfaces à jointoyer de ce fait, il est inutile d'usiner soigneusement les surfaces devant être mises en contact les unes avec les autres et de serrer avec force les assemblages obtenus. Ces particularités permettent de supprimer dans une certaine mesure, les joints de fixation, des entretoises, des nervures destinées habituellement à raidir et renforcer les éléments d'assemblages. Le "joint profilés sur pièce" est généralement un cordon fermé d'élastomère silicone de section ovoïde déposé selon un profil bien défini et devant assurer l'étanchéité de deux (ou plusieurs) pièces démontables.

Comme les compositions utilisées dans le procédé selon l'invention durcissent rapidement à température ambiante et même en milieu confiné, il en résulte que les joints d'étanchéité silicones découlant du durcissement de ces compositions peuvent être préparés dans des conditions de fabrication industrielle très contraignantes. Ils peuvent, par exemple, être fabriqués sur les chaînes de montage usuelles de l'industrie automobile munies d'un appareil automatique de dépose des compositions. Cet appareil automatique possède bien souvent une tête mélangeuse et une buse de dépose, celle-ci se déplaçant selon le profil des joints à fabriquer. Les compositions, fabriquées et distribuées au moyen de cet appareil ont de préférence une durée de durcissement bien ajustée pour d'une part éviter des prises en masse dans la tête mélangeuse et d'autre part obtenir une réticulation complète après la fin de la dépose du cordon pâteux sur les pièces à jointoyer. Ces joints "en forme" conviennent plus spécialement pour les joints de couvre-culbuteurs, de couvercles de boîtes à vitesses, d'entretoises de distribution et même de carters d'huile.

Le composant peut être de nature diverse et variée et en verre, en plastique, ou en métal.

Selon un autre mode de réalisation particulier du procédé selon l'invention le composant du groupe moto-propulseur est choisi parmi le groupe constitué par: une culasse, un carter d'huile, un couvre-culasse, un carter de distribution, un barreau de palier, un bloc cylindre moteur, une boîte de vitesses, une pompe à eau, un boîtier de réaspiration des gaz carter, un filtre à eau, un filtre à huile, une pompe à huile, un boitier comprenant des composants électroniques d'un groupe moto-propulseur ou un carter d'embrayage.

De manière générale, on applique la composition silicone sur le composant soit sous la forme de joint continu ou discontinu, soit sous la forme de couche continue ou discontinue, Pour former une couche continue ou discontinue, on peut utiliser les techniques de dépose ou d'enduction classiques.

Après le dépôt des compositions telles quelles, sur des substrats solides, en atmosphère humide, on constate qu'un processus de durcissement en élastomère se met en oeuvre, il s'effectue de l'extérieur à l'intérieur de la masse déposée. Une peau se forme d'abord en surface puis la réticulation se poursuit en profondeur. La formation complète de la peau, qui se traduit par un toucher non collant de la surface, demande une période de temps de quelques minutes; cette période dépendant du taux d'humidité relative de l'atmosphère entourant les compositions et de la faculté de réticulation de celles-ci.

D'autres avantages et caractéristiques de la présente invention apparaîtront à la lecture des exemples suivants donnés à titre illustratif nullement limitatif.

### EXEMPLES

### I) Préparation des formulations

### Produits commerciaux utilisés

### Silanes (Comparatifs) et silanes partiellement hydrolysés et condensés (selon l'invention): :

Dynasylan VTMO : (CH₂=CH₂)Si(OCH₃)₃ (fournisseur Evonik)
Dynasylan MTMS : CH₃Si(OCH₃)₃ (fournisseur Evonik)
Dynasylan A : Si(OEt)₄ (fournisseur Evonik)
Dynasylan 40 : Si(OEt)₄ hydrolysé partiellement et condensé.
Dynasylan 6490 : Vinyltriméthoxysilane (VTMO) hydrolysé partiellement et condensé.

### Catalyseurs de condensation :

Tyzor PITA SM : 20% pds de CH₃Si(OCH₃)₃ et 80% en poids de (iPrO)₂Ti(éthylacétoacétonate)₂

### Promoteurs d'adhérence :

Dynasylan DAMO (Evonik): N-béta-(aminoéthyl)-gamma-aminopropyltriméthoxysilane Dynasylan GLYMO (Evonik) gamma-glycidoxypropyltriméthoxysilane

### Charges:

Célite350 : Terre de diatomée (fournisseur World Minerals)
Silice AE55 : Silice de combustion traitée en surface
Winnofil SPM : carbonate de calcium traité stéarate (fournisseur Solvay)
BLR3 : carbonate de calcium traité en surface par un stéarate (fournisseur Omya) Noir Y70 : Noir d'acétylène (fournisseur SN2A)

### Produits préparés

### Synthèse 1-butyl-2,3-dicyclohexylguanidine (2)

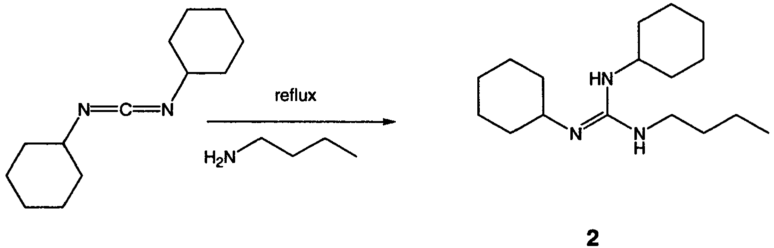

Un mélange de 15.69 g de N-butylamine (0,214 mol) et de 22.13 g de dicyclohexylcarbodiimide (0,107 mol) est chauffé à reflux 2h. L'analyse par CPG montre alors une conversion supérieure à 99.6 % de la dicyclohexylcarbodiimide. Le mélange final incolore est concentré à 60°C sous 1 mbar pendant 2 h pour donner 29.7 g d'un liquide incolore et pratiquement inodore moyennement visqueux, correspondant à la guanidine attendue 2 (rendement 99 %).

### Exemple comparatif C1

Dans un mélangeur équipé d'un mobile d'agitation de type « papillon » sont introduits 895 g d'huile polydiméthylsiloxane α,ω-dihydroxylée contenant 0,065% en poids de groupements hydoxyle OH et 12 g de vinyltriméthoxysilane (VTMO, Evonik). Ce mélange est homogénéïsé par rotation du « papillon » à 200t/mn pendant 2 minutes. Ensuite 4,8 g d'un catalyseur de fonctionnalisation à base de lithine monohydratée dissoute dans le méthanol sont alors ajoutés. Suit une phase d'homogénéisation de 4 minutes à 400 t/mn. Puis, 108 g de silice de combustion traitée D4 sont incorporées à vitesse d'agitation de 190t/mn et dispersés pendant 4 minutes supplémentaires à 400 t/mn. Puis, 144 g de terre de diatomée (Célite350, World Minerals) sont incorporées à vitesse d'agitation de 200t/mn et dispersés pendant 4 minutes supplémentaires à 400 t/mn. Le milieu subit alors une phase de dégazage sous vide partiel de 50 mbar puis le mélange est placé sous azote et conservé à l'abri de l'humidité. Sous azote et agitation sont ajoutés 24g de catalyseur Tyzor PITA SM. Le milieu est agité puis subit une phase de dégazage sous vide partiel de 40 mbar à 130 t/mn. Enfin le mélange est transféré en cartouches plastiques fermées.

### Exemple comparatif C2

Dans un mélangeur équipé d'un mobile d'agitation de type « papillon » sont introduits 765 g d'huile polydiméthylsiloxane α,ω-dihydroxylée contenant 0,065% en poids de groupements hydoxyle OH, 95,5 g de noir d'acétylene Y70 (société SN2A) et 23,8 g de vinyltriméthoxysilane (VTMO, Evonik). Ce mélange est homogénéïsé par rotation du « papillon » à 200t/mn pendant 2 minutes. Ensuite 0,58 g d'un catalyseur de fonctionnalisation à base de lithine monohydratée dissoute dans le méthanol sont alors ajoutés. Suit une phase d'homogénéïsation de 4 minutes à 400 t/mn. Puis, 302 g de carbonate de calcium BLR3 (société Solvay) sont incorporées à vitesse d'agitation de 200t/mn et dispersés pendant 4 minutes supplémentaires à 400 t/mn. Le milieu subit alors une phase de dégazage sous vide partiel de 50 mbar puis le mélange est placé sous azote et conservé à l'abri de l'humidité.

Sous azote et agitation sont ajoutés 15 g de Tyzor PITA SM. Le milieu est agité puis subit une phase de dégazage sous vide partiel de 40 mbar à 130 t/mn. Enfin le mélange est transféré en cartouches plastiques fermées.

### Exemple comparatif C3

Dans un mélangeur équipé d'un mobile d'agitation de type « papillon » sont introduits 626 g d'huile polydiméthylsiloxane α,ω-dihydroxylée contenant 0,045% en poids de groupements hydoxyle OH, 120g d'huile polydiméthylsiloxane α,ω-trimethylsilylé de viscosité 100 mPa.s, 96 g de noir d'acétylene Y70 (société SN2A) et 48 g de vinyltriméthoxysilane (VTMO, Evonik). Ce mélange est homogénéïsé par rotation du « papillon » à 200t/mn pendant 2 minutes. Ensuite 0,6 g d'un catalyseur de fonctionnalisation à base de lithine monohydratée dissoute dans le méthanol sont alors ajoutés. Suit une phase d'homogénéïsation de 4 minutes à 400 t/mn. Puis, 300 g de carbonate de calcium BLR3 (société Solvay) sont incorporées à vitesse d'agitation de 200t/mn et dispersés pendant 4 minutes supplémentaires à 400 t/mn. Le milieu subit alors une phase de dégazage sous vide partiel de 50 mbar puis le mélange est placé sous azote et conservé à l'abri de l'humidité.

Sous azote et agitation sont ajoutés à 6 g de Dynasylan DAMO et 3,6 g de di(cyclohexyl)méthylbutylguanidine **(1).** Le milieu est agité puis subit une phase de dégazage sous vide partiel de 40 mbar à 130 t/mn. Enfin le mélange est transféré en cartouches plastiques fermées.

### Exemple Comparatif C4

Même exemple que celui décrit dans l'exemple C1 mais 12 g de méthyltrimethoxysilane partiellement hydrolysé (1) sont également ajoutés juste avant l'introduction du catalyseur Tyzor PITA SM.

### Exemple Comparatif C5

Même exemple que celui décrit dans exemple C1 mais 24 g de methyltrimethoxysilane partiellement hydrolysé (1) sont également ajoutés juste avant l'introduction du catalyseur Tyzor PITA SM.

### Exemple de référence 5

Même exemple que C2 mais 48 g de methyltrimethoxysilane partiellement hydrolysé et condensé sont également ajoutés juste avant l'introduction du catalyseur Tyzor PITA SM.

### Exemple de référence 6

Dans un mélangeur équipé d'un mobile d'agitation de type « papillon » sont introduits 585 g d'huile polydiméthylsiloxane α,ω-dihydroxylée contenant 0,045% en poids de groupements hydoxyle OH, 120g d'huile polydiméthylsiloxane α,ω-trimethylsilylé de viscosité 100 mPa.s, 96 g de noir d'acétylene Y70 (société SN2A) et 24 g de vinyltriméthoxysilane (VTMO, Evonik). Ce mélange est homogénéïsé par rotation du « papillon » à 200t/mn pendant 2 minutes. Ensuite 0,5 g d'un catalyseur de fonctionnalisation à base de lithine monohydratée dissoute dans le méthanol sont alors ajoutés. Suit une phase d'homogénéïsation de 4 minutes à 400 t/mn. Puis, 300 g de carbonate de calcium BLR3 (société Solvay) sont incorporées à vitesse d'agitation de 200t/mn et dispersés pendant 4 minutes supplémentaires à 400 t/mn. Le milieu subit alors une phase de dégazage sous vide partiel de 50 mbar puis le mélange est placé sous azote et conservé à l'abri de l'humidité.

Sous azote et agitation sont ajoutés 48 g de méthyltrimethoxysilane partiellement hydrolysé (1), 12 g de Dynasylan GLYMO et 15 g de catalyseur Tyzor PITA SM. Le milieu est agité puis subit une phase de dégazage sous vide partiel de 40 mbar à 130 t/mn. Enfin le mélange est transféré en cartouches plastiques fermées.

### Exemple 7 (Invention)

Même exemple que C3 avec 24 g de Vinyltriméthoxysilane au lieu de 48 g et ajout de 48 g de Dynasylan 6490 juste avant l'introduction du catalyseur 1-butyl-2,3-dicyclohexylguanidine (2).

### II) Caractérisation des produits

### a) Propriétés mécaniques

Un joint sous la forme d'un film de 2mm d'épaisseur est alors préparé avec chacune des formulations et laissé réticuler pendant 7 jours dans des conditions contrôlées (23°C+/-2°C et 50%+/- 5 d'humidité). La dureté Shore A et les propriétés mécaniques à la traction (allongement à la rupture, résistance à la rupture et module à 100% d'allongement) sont alors mesurées à partir d'éprouvettes d'épaisseur 2mm après 14 jours de réticulation.

### b) Propriétés de résistance aux huiles moteur

Des joints sous forme de films de 2 mm d'épaisseur sont préalablement mis à réticuler en salle conditionnée à 23°C et à 50 % d'hygrométrie pendant 14 jours. Dans chaque cas, 3 éprouvettes de forme carrée découpées dans les joints et dont la dureté Shore A a été préalablement mesurée (par superposition des 3 carrés), sont introduites dans un flacon en verre de 150 ml rempli d'huile 5W30 diesel (distribuée par la société Total). Après chauffage à 150°C pendant 3 jours et retour à la température ambiante, les éprouvettes sont essuyées à l'aide d'un papier absorbant et la dureté Shore A est mesurée à l'aide d'un duromètre Zwick.

### c) Propriétés d'adhérence

Un joint parallélépipède d'élastomère silicone de 1 mm d'épaisseur est appliqué entre deux sterigmes. L'éprouvette ainsi obtenue, après 14 jours de réticulation à 23°C+/- 2°C et 50% humidité relative+/- 5% est soumise à une sollicitation en traction-cisaillement. Le collage est caractérisé par la contrainte à la rupture (MPa) et le type de rupture (pourcentage de profil cohésif).
Les éprouvettes en Aluminium de qualité AG3 sont préalablement grattées afin d'éliminer la couche d'oxyde puis nettoyées au solvant et séchées.
Pour les tests d'adhérence sur surface polluée d'huile, les éprouvettes sont trempées dans un mélange d'heptane et d'huile Elf Diesel 5W30 (95/5) pendant puis égouttées avant de déposer le joint d'élastomère silicone.

### III) Résultats

**Tableau 1**

| | | | | |
|---|---|---|---|---|
| | | **C1** | **C4** | **C5** |
| **Composition** | **Teneur en catalyseur de condensation (1) ajoutée (% pds)** | 0 | 1 | 2 |
| **Après 7j de réticulation à 23°C et 50 %HR** | **Dureté Shore A (3*2 mm)** | 36 | 42 | 46 |
| | **Résistance à la rupture (MPa)** | 3,0 | 3,7 | 4,1 |
| | **Allongement à la rupture (%)** | 430 | 420 | 360 |
| | **Module à 100%** | 1,0 | 1,2 | 1,5 |
| **Après traitement dans l'huile Elf "Evolution" 5w30** | **Dureté Shore A (3*2 mm)** | 2 | **7** | 15 |

**Tableau 2.**

| | | Exemples comparatifs | | | | |
|---|---|---|---|---|---|---|
| Formulations | | **C2** | **C3** | **5** | **6** | **7** |
| | (1) en parties | 0 | 0 | 4 | 4 | 0 |
| | DS6490 en parties | 0 | 0 | 0 | 0 | 4 |
| | Promoteur adhérence | 0 | DAMO | 0 | GLYMO | DAMO |
| | Catalyseur | Tyzor PITA SM | (2) | Tyzor PITA SM | Tyzor PITA SM | (2) |
| Après 7j de réticulation à 23°C et 50 %HR | Dureté Shore A (3*2 mm) | 8 | 33 | 50 | 38 | 43 |
| | Résistance à la rupture (MPa) | 0,3 | 2,3 | 1,9 | 1,8 | 2,2 |
| | Elongation à la rupture (%) | 460 | 420 | 220 | 330 | 285 |
| | Module à 100% | 0,15 | 0,71 | 1,14 | 0,86 | 1,16 |
| Force de rupture (MPa) et cohésion (%) pour des collages de 1 mm d'épaisseur | Aluminium AG3 | Pas mesuré | 1,0 MPa (100%RC) | 0,9 MPa (95%) | 0,8 MPa (95%) | Pas mesuré |
| | Aluminium AG3 **surface polluée d'huile** | 0,1 MPa (0%) | 0,9 MPa (30%) | 0,5 MPa (5%) | 0,8 MPa (95%) | 1,0 MPa (85%) |
| Après traitement dans l'huile Elf "Evolution" 5w30 | Dureté Shore A (3*2 mm) | <1 (non mesurable) | 8 | **25** | **20** | **25 à 32** |

## Revendications

1. Composition polyorganosiloxane **X** réticulable en élastomère en présence d'eau par des réactions de polycondensation comprenant :
A) au moins un polyorganosiloxane **A** comprenant au moins un groupement alcoxylé et constitué de motifs siloxyles identiques ou différents, de formule :
(Z)_{b}(R⁴)ₐSiO_{[4-(a'+b)]/2} **(1)**
dans laquelle :
• le symbole Z = [-(OCH₂CH₂)_{c}-OR⁵], avec c=0 ou 1,
• a= 0, 1, 2 ou 3; b= 0, 1, 2 ou 3, a+b= 0, 1, 2 ou 3,
• le symbole R⁴ représente un radical monovalent hydrocarboné en C₁ à C₁₃,
• le symbole R⁵ représente un radical monovalent hydrocarboné en C₁ à C₆ ou un radical alkoxyalkyle comprenant éventuellement une fonction ester, et
• avec la condition que pour au moins un motif siloxyle l'indice b≥1 de manière à ce que le polyorganosiloxane **A** contienne au moins un groupement alcoxylé Z,
B) au moins un siloxane **D** qui est un condensat obtenu par hydrolyse partielle et condensation d'un silane polyalcoxylé, le dit siloxane D ayant de 2 à 10 motifs siloxyles, identiques ou différents, de formule :
(R²)_{x'}(OR³)_{y'}SiO_{[4-(x'+y')]/2} **(2)**
dans laquelle :
- x'= 0, 1, 2 ou 3; y'= 0, 1, 2 ou 3, x'+y'= 0, 1, 2 ou 3,
- le symbole R² représente un radical monovalent hydrocarboné en C₁ à C₁₃, et
- le symbole R³ représente un radical monovalent hydrocarboné en C₁ à C₆ ou un radical alkoxyalkyle comprenant éventuellement une fonction ester, et
- avec la condition que pour au moins un motif siloxyle l'indice y'≥1.
C) un additif E susceptible d'absorber une huile utilisée dans un groupe moto-propulseur qui est le noir d'acétylène,
D) une quantité catalytiquement efficace d'au moins un catalyseur de condensation **F,**
E) au moins une charge **G** qui est un carbonate de calcium d'un diamètre particulaire moyen supérieur à 0,1 µm éventuellement traité en surface par un acide organique ou un ester d'acide organique,
F) éventuellement au moins un promoteur d'adhérence **H,** et
G) éventuellement au moins un additif **I** tel qu'une base colorante, un pigment ou un agent thixotropant.

2. Composition polyorganosiloxane **X** selon la revendication 1 dans laquelle le polyorganosiloxane réticulable **A** est linéaire et a pour formule développée: 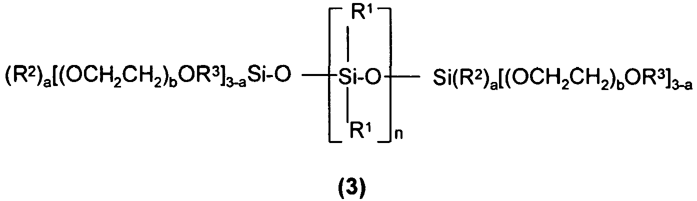 dans laquelle :
• les substituants R1, identiques ou différents, représentent chacun un radical monovalent hydrocarboné saturé ou non en C₁ à C₁₃, substitué ou non substitué, aliphatique, cyclanique ou aromatique ;
• les substituants R2, identiques ou différents, représentent chacun un radical monovalent hydrocarboné saturé ou non en C₁ à C₁₃, substitué ou non substitué, aliphatique, cyclanique ou aromatique ;
• les substituants R3, identiques ou différents, représentent chacun un radical alkyle, linéaire ou ramifié, en C₁ à C₆;
• n a une valeur suffisante pour conférer au polyorganopolysiloxane de formule A une viscosité dynamique à 25°C allant de 1.000 à 1.000.000 mPa.s ; et
• l'indice a est égal à zéro ou 1 et l'indice b est égal à zéro ou 1 ;

3. Composition polyorganosiloxane X selon la revendication 1 dans laquelle le polyorganosiloxane **A** comprenant au moins un groupement alcoxylé est obtenu en faisant réagir, éventuellement in-situ, en présence d'une quantité catalytiquement efficace d'au moins un catalyseur C de fonctionnalisation:
a) au moins un polyorganosiloxane **A'** comprenant des motifs siloxyles de formule :
(R¹)ₓ(OH)_{y}SiO_{(4-x-y)//2} **(4)**
dans laquelle :
- x+y= 0, 1, 2 ou 3 ;
- les substituants R¹, identiques ou différents, représentent chacun un radical monovalent hydrocarboné en C₁ à C₃₀ et choisi parmi le groupe constitué par les radicaux alkyles, cycloalkyles, aryles ; alkaryles et aralkyles, et
- au moins deux motifs siloxyles comprenant un groupement =SiOH sont présents dans le polyorganosiloxane **A',** avec
b) au moins un silane polyalcoxylé **B** de formule :
(R²)_{z}Si(OR³)_{(4-z)} **(5)**
dans laquelle :
- z = 0 ou 1,
- le symbole R² représente un radical monovalent hydrocarboné en C₁ à C₁₃, et
- les symboles R³, identiques ou différents, représentent chacun un radical monovalent hydrocarboné en C₁ à C₆ ou un radical alkoxyalkyle présentant éventuellement une fonction ester,

4. Composition polyorganosiloxane **X** selon l'une quelconque des revendications prédédentes dans laquelle la charge **G** est un carbonate de calcium traité en surface par un acide stéarique.

5. Composition polyorganosiloxane **X** selon la revendication 3 dans laquelle le catalyseur **C** de fonctionnalisation est la lithine ou la potasse.

6. Composition polyorganosiloxane **X** selon la revendication 1 dans laquelle le catalyseur de condensation **F** est un dérivé de l'étain, du zinc ou du titane ou une guanidine éventuellement silylée.

7. Composition polyorganosiloxane **X** selon la revendication 6 dans laquelle le catalyseur de condensation **F** est une guanidine répondant à la formule générale **(I)**: 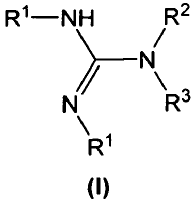 dans laquelle :
• les radicaux R¹, identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle,
• le radical R² représente un atome d'hydrogène, un groupement alkyle monovalent linéaire ou ramifié, un groupement cycloalkyle, un groupement alkyle substitué par un cycle, substitué ou non et pouvant comprendre au moins un hétéroatome, un groupement aromatique un groupe arylalkyle, un groupement fluoroalkyle, un groupement alkylamine ou alkylguanidine,
• le radical R³ représente un groupement alkyle monovalent linéaire ou ramifié, un groupement cycloalkyle, un groupement alkyle substitué par un cycle, substitué ou non et pouvant comprendre au moins un hétéroatome, un groupement arylalkyle, fluoroalkyle, alkylamine ou alkylguanidine, et
• lorsque le radical R² n'est pas un atome d'hydrogène, les radicaux R² et R³ peuvent être liés pour former un cycle aliphatique à 3, 4, 5, 6 ou 7 chaînons éventuellement substitué par un ou plusieurs substituants.

8. Composition polyorganosiloxane **X** selon la revendication 6 dans laquelle le catalyseur de condensation F est une guanidine de formule : 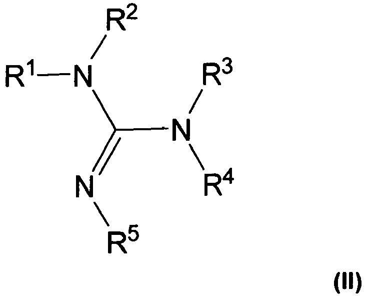 dans laquelle :
• les radicaux R¹, R², R³, R⁴ ou R⁵ identiques ou différents, représentent, indépendamment l'un de l'autre, un groupe alkyle monovalent linéaire ou ramifié, un groupement cycloalkyle, un groupe (cycloalkyl)alkyle, le cycle étant substitué ou non et pouvant comprendre au moins un hétéroatome ou un groupement fluoroalkyle, un groupement aromatique un groupe arylalkyle, un groupement fluoroalkyle, un groupement alkylamine ou alkylguanidine, et
• les radicaux R¹, R², R³ ou R⁴ peuvent être liés deux à deux de manière à former un cycle aliphatique à 3, 4, 5, 6 ou 7 chaînons éventuellement substitué par un ou plusieurs substituants.

9. Composition polyorganosiloxane X selon la revendication 6 dans laquelle le catalyseur de condensation F est un complexe ou sel métallique du zinc de formule:
[Zn(L¹)ᵣ₁(L²)ᵣ₂] **(III)**
dans laquelle:
• r1 ≥ 1 et r2 ≥ 0 et la somme r1+r2=2,
• le symbole L¹ représente un ligand qui est un anion β-dicarbonylato ou l'anion énolate d'un composé β-dicarbonylé ou un anion acétylacétato dérivé d'un β-cétoester, et
• le symbole L² représente un ligand anionique différent de L¹.

10. Composition polyorganosiloxane **X** selon l'une quelconque des revendications précédentes comprenant :
A) pour 100 parties en poids d'au moins un polyorganosiloxane **A** comprenant au moins un groupement alcoxylé et constitué de motifs siloxyles identiques ou différents, de formule :
(Z)_{b}(R⁴)ₐSiO_{[4-(a'+b)]/2} **(1)**
dans laquelle:
• le symbole Z = [-(OCH₂CH₂)_{c}-OR⁵], avec c=0 ou 1,
• a= 0, 1, 2 ou 3; b= 0, 1, 2 ou 3, a+b= 0, 1, 2 ou 3,
• le symbole R⁴ représente un radical monovalent hydrocarboné en C₁ à C₁₃,
• le symbole R⁵ représente un radical monovalent hydrocarboné en C₁ à C₆ ou un radical alkoxyalkyle comprenant éventuellement une fonction ester, et
• avec la condition que pour au moins un motif siloxyle l'indice b≥1 de manière à ce que le polyorganosiloxane **A** contienne au moins un groupement alcoxylé Z,
B) de 1 à 50 parties en poids d'au moins un siloxane **D** qui est un condensat obtenu par hydrolyse partielle et condensation d'un silane polyalcoxylé, le dit siloxane **D** ayant de 2 à 10 motifs siloxyles, identiques ou différents, de formule :
(R²)_{x'}(OR³)_{y'}SiO_{[4-(x'+y')]/2} **(2)**
dans laquelle:
• x'= 0, 1, 2 ou 3; y'= 0, 1, 2 ou 3, x'+y'= 0, 1, 2 ou 3,
• le symbole R² représente un radical monovalent hydrocarboné en C₁ à C₁₃,
• le symbole R³ représente un radical monovalent hydrocarboné en C₁ à C₆ ou un radical alkoxyalkyle compenant éventuellement une fonction ester, et
• avec la condition que pour au moins un motif siloxyle l'indice y'≥1.
C) de 0,1 à 50 parties en poids d'un additif **E** susceptible d'absorber une huile utilisée dans un groupe moto-propulseur qui est le noir d'acétylène,
D) de 0,01 à 50 parties en poids une quantité catalytiquement efficace d'au moins un catalyseur de condensation **F,**
E) jusqu'à 250 parties en poids d'au moins une charge **G** qui est un carbonate de calcium d'un diamètre particulaire moyen supérieur à 0,1 µm éventuellement traité en surface par un acide organique ou un ester d'acide organique,
F) de 0 à 60 parties en poids d'au moins un promoteur d'adhérence **H,** et
G) de 0 à 20 parties en poids d'au moins un additif **I** tel qu'une base colorante, un pigment ou un agent thixotropant.

11. Elastomère obtenu par réticulation en présence d'eau de la composition polyorganosiloxane **X** telle que définie selon l'une quelconque des revendications précédentes.

12. Utilisation de la composition polyorganosiloxane **X** telle que définie selon l'une quelconque des revendications 1 à 10 ou de l'élastomère tel que défini selon la revendication 11 pour préparer des joints silicones d'étanchéité ayant une bonne résistance au vieillissement dans des fluides utilisés dans un groupe motopropulseur.

13. Procédé d'étanchéification et d'assemblage d'au moins un composant d'un groupe moto-propulseur comprenant les étapes a) à d) suivantes:
a) on prépare une composition polyorganosiloxane **X** telle que définie selon l'une quelconque des revendications 1 à 10,
b) on applique ladite composition polyorganosiloxane **X** sur au moins une zone de contact dudit composant de manière continue ou discontinue et éventuellement sous la forme d'un cordon,
c) on laisse réticuler ladite composition polyorganosiloxane **X** en élastomère silicone en présence d'humidité apportée par l'air ambiant ou par addition préalable d'eau de manière à former un joint d'étanchéité, et
d) on assemble ledit composant à un autre composant du groupe moto-propulseur de manière à ce que le joint formé assure l'assemblage et l'étanchéité entre les deux composants du groupe moto-propulseur.

## Patentansprüche

1. Polyorganosiloxanzusammensetzung **X,** die durch Polykondensationsreaktionen in Gegenwart von Wasser zu einem Elastomer vernetzbar ist, umfassend:
A) mindestens ein Polyorganosiloxan **A,** das mindestens eine Alkoxygruppe umfasst und aus gleichen oder verschiedenen Siloxyleinheiten der Formel
(Z)_{b}(R⁴)ₐSiO_{[4-(a'+b)]/2} **(1)**
besteht, wobei:
• das Symbol Z = [-(OCH₂CH₂)_{c}-OR⁵] mit c = 0 oder 1,
• a = 0, 1, 2 oder 3, b = 0, 1, 2 oder 3, a + b = 0, 1, 2 oder 3,
• das Symbol R⁴ für einen einwertigen C₁- bis C₁₃-Kohlenwasserstoffrest steht,
• das Symbol R⁵ für einen einwertigen C₁- bis C₆-Kohlenwasserstoffrest oder einen Alkoxyalkylrest, der gegebenenfalls eine Esterfunktion umfasst, steht, und
• mit der Maßgabe, dass für mindestens eine Siloxyleinheit der Index b ≥ 1, so dass das Polyorganosiloxan **A** mindestens eine Alkoxygruppe Z umfasst,
B) mindestens ein Siloxan **D,** bei dem es sich um ein durch Partialhydrolyse und Kondensation eines Polyalkoxysilans erhaltenes Kondensat handelt, wobei das Siloxan **D** 2 bis 10 gleiche oder verschiedene Siloxyleinheiten der Formel:
(R²)_{x'}(OR³)_{y'}SiO_{[4-(x'+y')]/2} **(2)**
aufweist, wobei:
- x' = 0, 1, 2 oder 3, y' = 0, 1, 2 oder 3, x' + y' = 0, 1, 2 oder 3,
- das Symbol R² für einen einwertigen C₁- bis C₁₃-Kohlenwasserstoffrest steht,
- das Symbol R³ für einen einwertigen C₁- bis C₆-Kohlenwasserstoffrest oder einen Alkoxyalkylrest, der gegebenenfalls eine Esterfunktion umfasst, steht, und
- mit der Maßgabe, dass für mindestens eine Siloxyleinheit der Index y' ≥ 1,
C) ein Additiv **E,** das dazu in der Lage ist, ein in einer Antriebsgruppe verwendetes Öl zu absorbieren, bei dem es sich um Acetylenruß handelt,
D) eine katalytisch wirksame Menge mindestens eines Kondensationskatalysators **F,**
E) mindestens einen Füllstoff **G,** bei dem es sich um ein gegebenenfalls mit einer organischen Säure oder einem Ester einer organischen Säure oberflächenbehandeltes Calciumcarbonat mit einem mittleren Teilchendurchmesser von mehr als 0,1 µm handelt,
F) gegebenenfalls mindestens einen Haftvermittler **H** und
G) gegebenenfalls mindestens ein Additiv **I,** wie eine Farbbasis, ein Pigment oder ein Thixotropiermittel.

2. Polyorganosiloxanzusammensetzung **X** nach Anspruch 1, wobei das vernetzbare Polyorganosiloxan **A** linear ist und die Strukturformel: 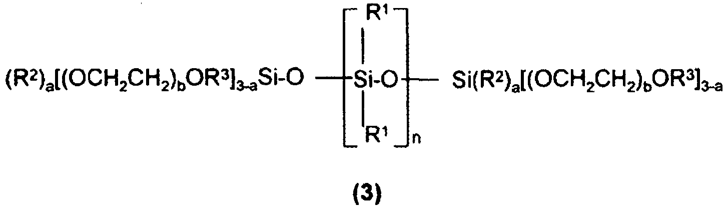 aufweist, wobei:
• die Substituenten R1 gleich oder verschieden sind und jeweils für einen aliphatischen, cyclanischen oder aromatischen, substituierten oder unsubstituierten, gesättigten oder ungesättigten einwertigen C₁- bis C₁₃-Kohlenwasserstoffrest stehen;
• die Substituenten R2 gleich oder verschieden sind und jeweils für einen aliphatischen, cyclanischen oder aromatischen, substituierten oder unsubstituierten, gesättigten oder ungesättigten einwertigen C₁- bis C₁₃-Kohlenwasserstoffrest stehen;
• die Substituenten R3 gleich oder verschieden sind und jeweils für einen linearen oder verzweigten C₁- bis C₆-Alkylrest stehen;
• n einen Wert hat, der ausreicht, um dem Polyorganopolysiloxan der Formel A eine dynamische Viskosität bei 25°C im Bereich von 1000 bis 1.000.000 mPa.s zu verleihen; und
• der Index a gleich null oder 1 ist und der Index b gleich null oder 1 ist.

3. Polyorganosiloxanzusammensetzung **X** nach Anspruch 1, wobei das Polyorganosiloxan **A,** das mindestens eine Alkoxygruppe umfasst, dadurch erhalten wird, dass man gegebenenfalls in situ in Gegenwart einer katalytisch wirksamen Menge mindestens eines Funktionalisierungskatalysators **C:**
a) mindestens ein Polyorganosiloxan **A',** das Siloxyleinheiten der Formel:
(R¹)ₓ(OH)_{y}SiO_{(4-x-y)]/2} **(4)**
umfasst, wobei:
- x + y = 0, 1, 2 oder 3,
- die Substituenten R¹ gleich oder verschieden sind und jeweils für einen einwertigen C₁- bis C₃₀-Kohlenwasserstoffrest, der aus der Gruppe bestehend aus Alkyl-, Cycloalkyl-, Aryl-, Alkaryl- und Aralkylresten ausgewählt ist, stehen und
- in dem Polyorganosiloxan **A'** mindestens zwei Siloxyleinheiten, die eine =SiOH-Gruppe umfassen, vorliegen, mit
b) mindestens einem Polyalkoxysilan **B** der Formel:
(R²)_{z}Si(OR³)_{(4-z)} **(5)**
wobei:
- z = 0 oder 1,
- das Symbol R² für einen einwertigen C₁- bis C₁₃-Kohlenwasserstoffrest steht und
- die Symbole R³ gleich oder verschieden sind und jeweils für einen einwertigen C₁- bis C₆-Kohlenwasserstoffrest oder einen Alkoxyalkylrest, der gegebenenfalls eine Esterfunktion umfasst, stehen,
umsetzt.

4. Polyorganosiloxanzusammensetzung **X** nach einem der vorhergehenden Ansprüche, wobei es sich bei dem Füllstoff **G** um ein mit einer Stearinsäure oberflächenbehandeltes Calciumcarbonat handelt.

5. Polyorganosiloxanzusammensetzung **X** nach Anspruch 3, wobei es sich bei dem Funktionalisierungskatalysator **C** um Lithiumhydroxid oder Kaliumhydroxid handelt.

6. Polyorganosiloxanzusammensetzung **X** nach Anspruch 1, wobei es sich bei dem Kondensationskatalysator **F** um ein Zinn-, Zink- oder Titanderivat oder ein gegebenenfalls silyliertes Guanidin handelt.

7. Polyorganosiloxanzusammensetzung **X** nach Anspruch 6, wobei es sich bei dem Kondensationskatalysator **F** um ein Guanidin handelt, das der allgemeinen Formel **(I)** entspricht: 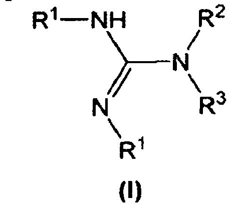 wobei:
• die Reste R¹ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom oder eine Fluoralkylgruppe enthalten kann, stehen;
• der Rest R² für ein Wasserstoffatom, eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine aromatische Gruppe, eine Arylalkylgruppe, eine Fluoralkylgruppe, eine Alkylamingruppe oder eine Alkylguanidingruppe steht;
• der Rest R³ für eine lineare oder verzweigte einwertige Alkylgruppe, eine Cycloalkylgruppe, eine durch einen Ring, der gegebenenfalls substituiert ist und mindestens ein Heteroatom enthalten kann, substituierte Alkylgruppe, eine Arylalkylgruppe, eine Fluoralkylgruppe, eine Alkylamingruppe oder eine Alkylguanidingruppe steht; und
• dann, wenn der Rest R² nicht für ein Wasserstoffatom steht, die Reste R² und R³ zu einem 3-, 4-, 5-, 6- oder 7-gliedrigen aliphatischen Ring, der gegebenenfalls durch einen oder mehrere Substituenten substituiert ist, verbunden sein können.

8. Polyorganosiloxanzusammensetzung **X** nach Anspruch 6, wobei es sich bei dem Kondensationskatalysator F um ein Guanidin der Formel: 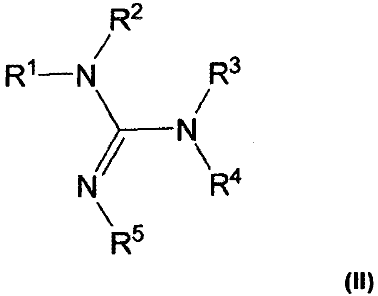 handelt, wobei:
• die Reste R¹, R², R³, R⁴ oder R⁵ gleich oder verschieden sind und unabhängig voneinander für eine lineare oder verzweigte einwertige Alkylgruppe, eine Cycloalkylgruppe, eine (Cycloalkyl)alkylgruppe, wobei der Ring gegebenenfalls substituiert ist und mindestens ein Heteroatom oder eine Fluoralkylgruppe enthalten kann, eine aromatische Gruppe, eine Arylalkylgruppe, eine Fluoralkylgruppe, eine Alkylamingruppe oder eine Alkylguanidingruppe stehen und
• die Reste R¹, R², R³ oder R⁴ paarweise so verbunden sein können, dass sie einen 3-, 4-, 5-, 6- oder 7-gliedrigen aliphatischen Ring bilden, der gegebenenfalls durch einen oder mehrere Substituenten substituiert ist.

9. Polyorganosiloxanzusammensetzung **X** nach Anspruch 6, wobei es sich bei dem Kondensationskatalysator **F** um einen Metallkomplex oder ein Metallsalz von Zink der Formel:
[Zn(L¹)ᵣ₁(L²)ᵣ₂] **(III)**
handelt, wobei:
• r1 ≥ 1 und r2 ≥ 0 und die Summe r1 + r2 = 2,
• das Symbol L¹ für einen Liganden steht, bei dem es sich um ein **β**-Dicarbonylato-Anion oder ein Enolat-Anion einer **β**-Dicarbonylverbindung oder ein Acetylacetato-Anion, das sich von einem β-Ketoester ableitet, handelt und
• das Symbol L² für einen anionischen Liganden, der von L¹ verschieden ist, steht.

10. Polyorganosiloxanzusammensetzung **X** nach einem der vorhergehenden Ansprüche, umfassend:
A) auf 100 Gewichtsteile mindestens eines Polyorganosiloxans **A,** das mindestens eine Alkoxygruppe umfasst und aus gleichen oder verschiedenen Siloxyleinheiten der Formel:
(Z)_{b}(R⁴)ₐSiO_{[4-(a'+b)]/2} **(1)**
besteht, wobei:
• das Symbol Z = [-(OCH₂CH₂)_{c}-OR⁵] mit c = 0 oder 1,
• a = 0, 1, 2 oder 3, b = 0, 1, 2 oder 3, a + b = 0, 1, 2 oder 3,
• das Symbol R⁴ für einen einwertigen C₁- bis C₁₃-Kohlenwasserstoffrest steht,
• das Symbol R⁵ für einen einwertigen C₁- bis C₆-Kohlenwasserstoffrest oder einen Alkoxyalkylrest, der gegebenenfalls eine Esterfunktion umfasst, steht, und
• mit der Maßgabe, dass für mindestens eine Siloxyleinheit der Index b ≥ 1, so dass das Polyorganosiloxan **A** mindestens eine Alkoxygruppe Z umfasst,
B) 1 bis 50 Gewichtsteile mindestens eines Siloxans **D,** bei dem es sich um ein durch Partialhydrolyse und Kondensation eines Polyalkoxysilans erhaltenes Kondensat handelt, wobei das Siloxan **D** 2 bis 10 gleiche oder verschiedene Siloxyleinheiten der Formel:
(R²)_{x'} (OR³)_{y'}SiO_{[4-(x'+y')]/2} **(2)**
aufweist, wobei:
- x' = 0, 1, 2 oder 3, y' = 0, 1, 2 oder 3, x' + y' = 0, 1, 2 oder 3,
- das Symbol R² für einen einwertigen C₁- bis C₁₃-Kohlenwasserstoffrest steht,
- das Symbol R³ für einen einwertigen C₁- bis C₆-Kohlenwasserstoffrest oder einen Alkoxyalkylrest, der gegebenenfalls eine Esterfunktion umfasst, steht, und
- mit der Maßgabe, dass für mindestens eine Siloxyleinheit der Index y' ≥ 1,
C) 0,1 bis 50 Gewichtsteile eines Additivs **E,** das dazu in der Lage ist, ein in einer Antriebsgruppe verwendetes Öl zu absorbieren, bei dem es sich um Acetylenruß handelt,
D) 0,01 bis 50 Gewichtsteile einer katalytisch wirksamen Menge mindestens eines Kondensationskatalysators **F,**
E) bis zu 250 Gewichtsteile mindestens eines Füllstoffs **G,** bei dem es sich um ein gegebenenfalls mit einer organischen Säure oder einem Ester einer organischen Säure oberflächenbehandeltes Calciumcarbonat mit einem mittleren Teilchendurchmesser von mehr als 0,1 µm handelt,
F) 0 bis 60 Gewichtsteile mindestens eines Haftvermittlers **H** und
G) 0 bis 20 Gewichtsteile mindestens eines Additivs **I,** wie einer Farbbasis, eines Pigments oder eines Thixotropiermittels.

11. Elastomer, erhalten durch Vernetzung der Polyorganosiloxanzusammensetzung **X** gemäß einem der vorhergehenden Ansprüche in Gegenwart von Wasser.

12. Verwendung der Polyorganosiloxanzusammensetzung **X** gemäß einem der Ansprüche 1 bis 10 oder des Elastomers gemäß Anspruch 11 zur Herstellung von Silikondichtungen mit guter Alterungsbeständigkeit in Fluiden, die in einer Antriebsgruppe verwendet werden.

13. Verfahren zum Abdichten und Montieren mindestens eines Bauteils einer Antriebsgruppe mit den folgenden Schritten a) bis d):
a) man stellt eine Polyorganosiloxanzusammensetzung **X** gemäß einem der Ansprüche 1 bis 10 her,
b) man bringt die Polyorganosiloxanzusammensetzung **X** kontinuierlich oder diskontinuierlich und gegebenenfalls in Form einer Raupe auf mindestens eine Kontaktzone des Bauteils auf,
c) man lässt die Polyorganosiloxanzusammensetzung **X** in Gegenwart von Feuchtigkeit, die durch die Umgebungsluft oder durch vorherige Zugabe von Wasser bereitgestellt wird, zu einem Silikonelastomer vernetzen, wobei man eine Dichtung erhält, und
d) man montiert das Bauteil so auf ein anderes Bauteil der Antriebsgruppe, dass die gebildete Dichtung die Montage und Abdichtung zwischen den beiden Bauteilen der Antriebsgruppe gewährleistet.

## Claims

1. Polyorganosiloxane composition **X** which can be crosslinked to give an elastomer in the presence of water by polycondensation reactions, comprising:
A) at least one polyorganosiloxane **A** comprising at least one alkoxylated group and composed of identical or different siloxyl units, of formula:
**(Z)_{b}(R⁴)ₐSiO_{[4-(a'+b)]/2}** **(1)**
in which:
• the symbol Z = [-(OCH₂CH₂)_{c}-OR⁵], with c = 0 or 1,
• a = 0, 1, 2 or 3; b = 0, 1, 2 or 3, a + b = 0, 1, 2 or 3,
• the symbol R⁴ represents a monovalent C₁ to C₁₃ hydrocarbon radical,
• the symbol R⁵ represents a monovalent C₁ to C₆ hydrocarbon radical or an alkoxyalkyl radical optionally comprising an ester functional group, and
• with the condition that, for at least one siloxyl unit, the index b ≥ 1, so that the polyorganosiloxane **A** comprises at least one alkoxylated group Z,
B) at least one siloxane **D** which is a condensate obtained by partial hydrolysis and condensation of a polyalkoxylated silane, said siloxane **D** having from 2 to 10 identical or different siloxyl units, of formula:
**(R²)_{x'}(OR³)_{y'} SiO_{[4-(x'+y')]/2}** **(2)**
in which:
- x' = 0, 1, 2 or 3; y' = 0, 1, 2 or 3; x' + y' = 0, 1, 2 or 3,
- the symbol R² represents a monovalent C₁ to C₁₃ hydrocarbon radical,
- the symbol R³ represents a monovalent C₁ to C₆ hydrocarbon radical or an alkoxyalkyl radical optionally comprising an ester functional group, and
- with the condition that, for at least one siloxyl unit, the index y' ≥ 1,
C) an additive **E** capable of absorbing an oil used in a power train, such as acetylene black,
D) a catalytically effective amount of at least one condensation catalyst **F,**
E) at least one filler **G** which is a calcium carbonate with a mean particle diameter of greater than 0.1 µm, optionally treated at the surface with an organic acid or an organic acid ester,
F) optionally at least one adhesion promoter **H,** and
G) optionally at least one additive **I,** such as a coloring base, a pigment or a thixotropic agent.

2. Polyorganosiloxane composition **X** according to Claim 1, in which the crosslinkable polyorganosiloxane **A** is linear and has the expanded formula: 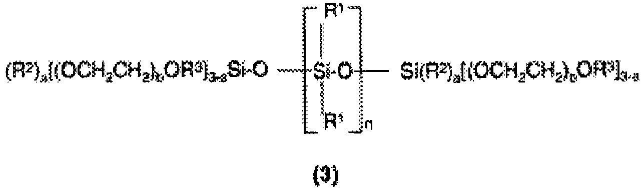 in which:
• the substituents R¹, which are identical or different, each represent a saturated or unsaturated monovalent C₁ to C₁₃ hydrocarbon radical which is substituted or unsubstituted and aliphatic, cyclanic or aromatic;
• the substituents R², which are identical or different, each represent a saturated or unsaturated monovalent C₁ to C₁₃ hydrocarbon radical which is substituted or unsubstituted and aliphatic, cyclanic or aromatic;
• the substituents R³, which are identical or different, each represent a linear or branched C₁ to C₆ alkyl radical;
• n has a value sufficient to confer, on the polyorganopolysiloxane of formula A, a dynamic viscosity at 25°C ranging from 1000 to 1 000 000 mPa.s; and
• the index a is equal to 0 or 1 and the index b is equal to 0 or 1.

3. Polyorganosiloxane composition **X** according to Claim 1, in which the polyorganosiloxane **A** comprising at least one alkoxylated group is obtained by reacting, optionally in situ, in the presence of a catalytically effective amount of at least one functionalization catalyst **C:**
a) at least one polyorganosiloxane **A'** comprising siloxyl units of formula:
**(R¹)ₓ(OH)_{y} SiO_{(4-x-y)//2}** **(4)**
in which:
- x + y = 0, 1, 2 or 3;
- the substituents R¹, which are identical or different, each represent a monovalent C₁ to C₃₀ hydrocarbon radical chosen from the group consisting of alkyl, cycloalkyl, aryl, alkaryl and aralkyl radicals, and
- at least two siloxyl units comprising an =SiOH group are present in the polyorganosiloxane **A'**, with
b) at least one polyalkoxylated silane **B** of formula:
**(R²)_{z}Si(OR³)_{(4-z)}** **(5)**
in which:
- z = 0 or 1,
- the symbol R² represents a monovalent C₁ to C₁₃ hydrocarbon radical, and
- the symbols R³, which are identical or different, each represent a monovalent C₁ to C₆ hydrocarbon radical or an alkoxyalkyl radical optionally exhibiting an ester functional group.

4. Polyorganosiloxane composition **X** according to any one of the preceding claims, in which the filler **G** is a calcium carbonate treated at the surface with a stearic acid.

5. Polyorganosiloxane composition **X** according to Claim 3, in which the functionalization catalyst **C** is lithium hydroxide or potassium hydroxide.

6. Polyorganosiloxane composition **X** according to Claim 1, in which the condensation catalyst **F** is a tin, zinc or titanium derivative or an optionally silylated guanidine.

7. Polyorganosiloxane composition **X** according to Claim 6, in which the condensation catalyst **F** is a guanidine corresponding to the general formula (I): 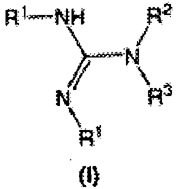 in which:
• the R¹ radicals, which are identical or different, represent, independently of one another, a linear or branched monovalent alkyl group, a cycloalkyl group, a (cycloalkyl)alkyl group, the ring being substituted or unsubstituted and being able to comprise at least one heteroatom, or a fluoroalkyl group,
• the R² radical represents a hydrogen atom, a linear or branched monovalent alkyl group, a cycloalkyl group, an alkyl group substituted by a ring, which is substituted or unsubstituted and which can comprise at least one heteroatom, an aromatic group, an arylalkyl group, a fluoroalkyl group, an alkylamine group or an alkylguanidine group,
• the R³ radical represents a linear or branched monovalent alkyl group, a cycloalkyl group, an alkyl group substituted by a ring, which is substituted or unsubstituted and which can comprise at least one heteroatom, or an arylalkyl, fluoroalkyl, alkylamine or alkylguanidine group, and
• when the R² radical is not a hydrogen atom, the R² and R³ radicals can be linked up to form a 3-, 4-, 5-, 6- or 7-membered aliphatic ring optionally substituted by one or more substituents.

8. Polyorganosiloxane composition **X** according to Claim 6, in which the condensation catalyst **F** is a guanidine of formula: 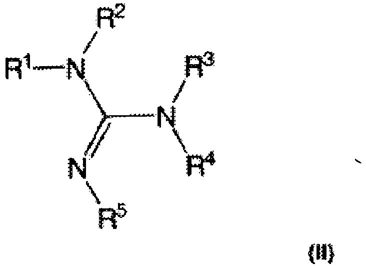 in which:
• the R¹, R², R³, R⁴ or R⁵ radicals, which are identical or different, represent, independently of one another, a linear or branched monovalent alkyl group, a cycloalkyl group, a (cycloalkyl)alkyl group, the ring being substituted or unsubstituted and being able to comprise at least one heteroatom or one fluoroalkyl group, an aromatic group, an arylalkyl group, a fluoroalkyl group, an alkylamine group or an alkylguanidine group, and
• the R¹, R², R³ or R⁴ radicals can be linked up in pairs so as to form a 3-, 4-, 5-, 6- or 7-membered aliphatic ring optionally substituted by one or more substituents.

9. Polyorganosiloxane composition **X** according to Claim 6, in which the condensation catalyst **F** is a metal complex or salt of zinc of formula:
**[Zn(L¹)ᵣ₁ (L²)ᵣ₂]** **(III)**
in which:
• r1 ≥ 1 and r2 ≥ 0 and r1 + r2 = 2,
• the symbol L¹ represents a ligand which is a β-dicarbonylato anion or the enolate anion of a β-dicarbonyl compound or an acetylacetato anion derived from a β-ketoester, and
• the symbol L² represents an anionic ligand other than L¹.

10. Polyorganosiloxane composition **X** according to any one of the preceding claims, comprising:
A) per 100 parts by weight of at least one polyorganosiloxane **A** comprising at least one alkoxylated group and composed of identical or different siloxyl units, of formula:
**(Z)_{b}(R⁴)ₐSiO_{[4-(a'+b)]/2}** **(1)**
in which:
• the symbol Z = [-(OCH₂CH₂)_{c}-OR⁵], with c = 0 or 1,
• a = 0, 1, 2 or 3; b = 0, 1, 2 or 3, a + b = 0, 1, 2 or 3,
• the symbol R⁴ represents a monovalent C₁ to C₁₃ hydrocarbon radical,
• the symbol R⁵ represents a monovalent C₁ to C₆ hydrocarbon radical or an alkoxyalkyl radical optionally comprising an ester functional group, and
• with the condition that, for at least one siloxyl unit, the index b ≥ 1, so that the polyorganosiloxane A comprises at least one alkoxylated group Z,
B) from 1 to 50 parts by weight of at least one siloxane **D** which is a condensate obtained by partial hydrolysis and condensation of a polyalkoxylated silane, said siloxane **D** having from 2 to 10 identical or different siloxyl units, of formula:
**(R²)_{x'}(OR³)_{y'} SiO_{[4-(x'+y')]/2}** **(2)**
in which:
- x' = 0, 1, 2 or 3; y' = 0, 1, 2 or 3; x' + y' = 0, 1, 2 or 3,
- the symbol R² represents a monovalent C₁ to C₁₃ hydrocarbon radical,
- the symbol R³ represents a monovalent C₁ to C₆ hydrocarbon radical or an alkoxyalkyl radical optionally comprising an ester functional group, and
- with the condition that, for at least one siloxyl unit, the index y' ≥ 1,
C) from 0.1 to 50 parts by weight of an additive **E** capable of absorbing an oil used in a power train, such as acetylene black,
D) from 0.01 to 50 parts by weight of a catalytically effective amount of at least one condensation catalyst **F,**
E) up to 250 parts by weight of at least one filler **G** which is a calcium carbonate with a mean particle diameter of greater than 0.1 µm, optionally treated at the surface with an organic acid or an organic acid ester,
F) from 0 to 60 parts by weight of at least one adhesion promoter **H,** and
G) from 0 to 20 parts by weight of at least one additive **I,** such as a coloring base, a pigment or a thixotropic agent.

11. Elastomer obtained by crosslinking, in the presence of water, of the polyorganosiloxane composition **X** according to any one of the preceding claims.

12. Use of the polyorganosiloxane composition **X** as defined according to any one of Claims 1 to 10 or of the elastomer as defined according to Claim 11 to prepare silicone gaskets having good resistance to ageing in fluids used in a power train.

13. Process for sealing and assembly of at least one component of a power train, comprising the following stages a) to d):
a) a polyorganosiloxane composition **X** as defined according to any one of Claims 1 to 10 is prepared,
b) said polyorganosiloxane composition **X** is applied to at least one contact region of said component, continuously or noncontinuously and optionally in the form of a strip,
c) said polyorganosiloxane composition **X** is allowed to crosslink to form a silicone elastomer in the presence of moisture contributed by the ambient air or by prior addition of water, so as to form a gasket, and
d) said component is assembled with another component of the power train so that the seal formed provides for the assembly and the sealing between the two components of the power train.
